# FASCICULE DE BREVET EUROPEEN

(11) **EP 1 209 257 B1**
(45) Date de publication et mention de la délivrance du brevet: **16.06.2004**
(21) Numéro de dépôt: 01402544.9
(22) Date de dépôt: 02.10.2001
(51) Int. Cl.: B29D 11/00, B29C 61/02

(54) **Miroirs ultra-légers et procédé de fabrication de miroirs ultra-légers**
Sehr leichter Spiegel und Verfahren zur Herstellung eines sehr leichten Spiegels
Ultra-light mirror and method of manufacturing un ultra-light mirror

(30) Priorité: 02.10.2000 FR 0012532
(43) Date de publication de la demande: 29.05.2002
(73) Titulaire: LIKE MIRROR, 60390 Beaumont Les Nonains (FR)
(72) Inventeur: Tupet, Alain, 60390 Beaumont-Les-Nonains (FR)
(74) Mandataire: Debay, Yves

(56) Documents cités:
- DE-A- 1 704 613
- FR-A- 2 491 816
- GB-A- 1 324 078
- US-A- 5 896 236

## Description

La présente invention concerne un procédé de fabrication de miroirs. L'invention concerne plus particulièrement, un procédé de fabrication de miroirs ultra légers, constitués d'un support sur lequel est tendu un film mince disposant d'une surface réfléchissante.

Il est connu par le brevet FR 2.491.816 un procédé de fabrication de panneaux-miroirs. Le panneau-miroir est fabriqué à partir d'un support-cadre sur lequel est tendu et collé de manière spécifique, un film à surface réfléchissante. Ensuite, une fois le film correctement collé sur le support, la surface tendue de film est balayée par un courant d'air chaud afin d'obtenir la thermorétraction du film, c'est-à-dire une tension accrue du film autour du cadre. Un deuxième film plastique de protection est ajouté sur l'arrière du cadre. Le problème de ce procédé est que la thermorétraction du film sur le support-cadre n'est pas uniforme, en particulier sur l'arrière du cadre ou au niveau des surfaces formant le contour du support-cadre. En effet, cette thermorétraction est effectuée successivement à divers endroits à l'aide de buses véhiculant un courant d'air chaud et se déplaçant au-dessus du panneau. La présente invention a donc pour objet de pallier les inconvénients de l'art antérieur en proposant un procédé de fabrication de panneaux miroirs permettant une tension uniforme du film à l'avant et à l'arrière du cadre.

Ce but est atteint par le procédé de fabrication selon la revendication 1.

Des développements supplémentaires de l'invention sont décrits dans les revendications 2 à 16.

L'invention, avec ses caractéristiques et avantages, ressortira plus clairement à la lecture de la description faite en référence aux dessins annexés dans lesquels :
- les figures 1a et 1b représentent en vue de dessus respectivement la face arrière du panneau-miroir et la face avant du panneau-miroir obtenu par le procédé,
- la figure 2 représente la section transversale du périmètre du cadre support,
- les figures 3a et 3b représentent respectivement en vue de côté et en vue de dessus, l'ensemble permettant la fabrication de panneaux selon l'invention,
- la figure 4 représente un organigramme résumant les étapes du procédé.

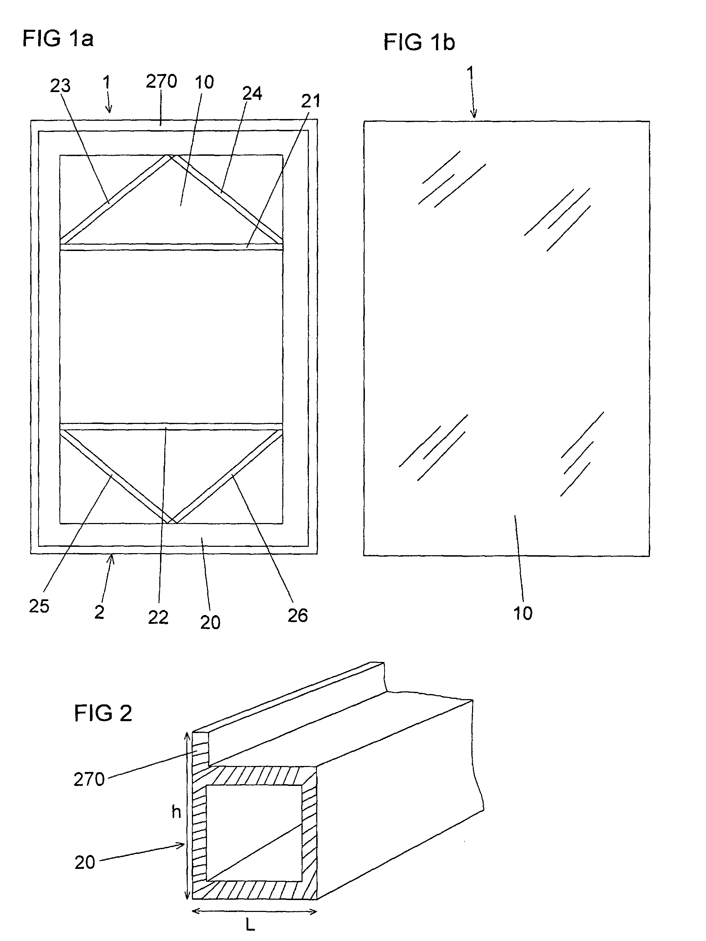

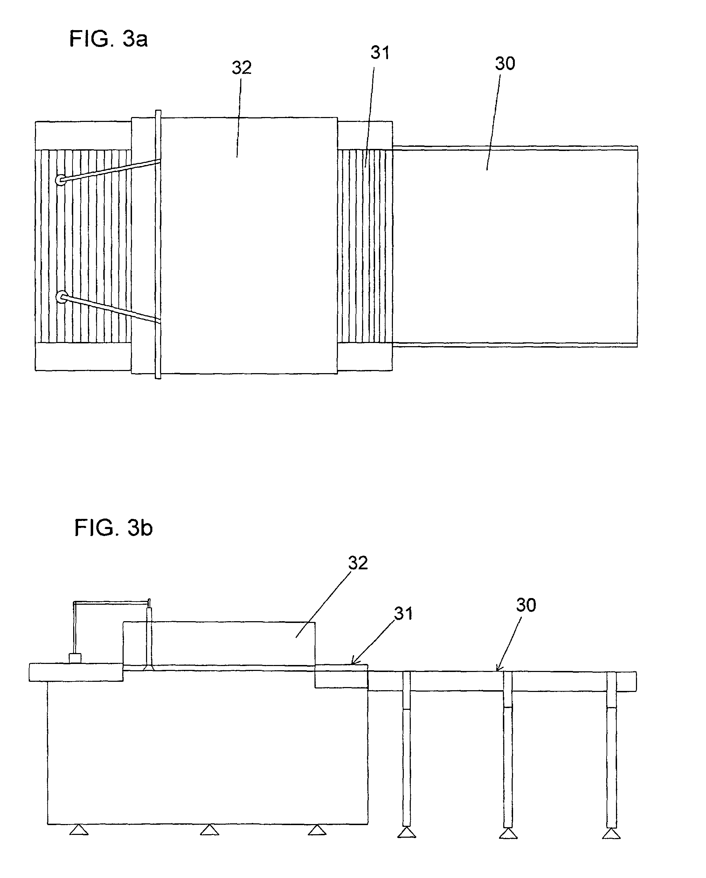

L'invention va à présent être décrite en liaison avec les figures 1 à 4.

Le procédé selon l'invention, se déroule de la manière suivante. Un panneau miroir (1) est fabriqué à partir d'un cadre-support (2) sur lequel est appliqué un film plastique (10) muni d'une surface réfléchissante. Le film (10) est par exemple appliqué sur la face avant du cadre (2). Le cadre-support (2) doit être à la fois rigide et léger. Il est constitué d'un périmètre (20) rectangulaire ayant la forme d'un profilé en aluminium creux et formant deux barres transversales (21, 22) et quatre autres barres (23, 24, 25, 26), réparties symétriquement deux à deux, respectivement sur la partie supérieure et sur la partie inférieure du cadre (2). Les deux barres transversales (21, 22) sont placées parallèles à la largeur du cadre (2). Chacune des quatre autres barres (23, 24, 25, 26) est disposée de manière à former un triangle dans les quatre coins du périmètre. Toutes ces barres sont formées de manière à servir d'appui au film (10) sur le cadre (2) au cas où une pression serait effectuée vers l'intérieur du cadre (2) sur la face extérieure du film (10).

La section transversale (27) du périmètre (20) a la forme d'un rectangle. Sur la face avant du périmètre (20) se dresse sur tout le périmètre et perpendiculairement à cette face, un profil (270) en arête sur lequel le film (10) plastique sera tendu. Ce profil est formé dans le prolongement du bord extérieur du périmètre (20). La section transversale (27) a, par exemple, une longueur L de 30 mm et une hauteur h de 8 mm, cette hauteur h de 8 mm incluant celle du profil en arête de 3 mm. Ces dimensions sont préférentiellement faibles pour alléger au maximum la masse du panneau-miroir (1). De plus, l'épaisseur du cadre (2) définie par h est faible de manière à ce que, lorsque le panneau-miroir (1) est accroché au mur, le film (10) soit le plus proche possible du mur. Le mur sert alors de protection au cas où une personne viendrait à appuyer sur la face extérieure du film (10).

Le film plastique (10) utilisé dans le procédé est, par exemple, un film alimentaire clair en polyester ou en polystyrène de 12 à 50 µm d'épaisseur.

D'abord, le film plastique (10) est métallisé sur une de ses faces, comme représenté à l'étape (40) de la figure 4. La métallisation peut-être effectuée sur les deux faces du film (10). La métallisation se fait sous vide par une couche de 2 à 3 µm d'aluminium. Des densités optiques variables peuvent être demandées. La densité optique est un élément déterminant pour obtenir un bon miroir. Si la densité optique est trop faible, une couche de vernis noir peut être déposée sur la face opposée à la face métallisée, de manière à rendre le miroir opaque. A une densité optique de 3,2 environ, on obtient des miroirs opaques. Les miroirs sont en règle générale obtenus avec des densités optiques de 2,5 ou plus. Avec des densités optiques de 0,5 à 1,5 on obtient des glaces sans tain.

Une surface de film (10) est découpée à des dimensions telles que l'on puisse rabattre les bords du film (10) sur l'arrière du cadre (2).

Le film (10) est ensuite tendu sur le profil (270) en arête du cadre (2) avec la face métallisée placée vers l'extérieur du cadre (2), comme représenté à l'étape (41) de la figure 4. Selon une variante, pour éviter la détérioration de la face métallisée, celle-ci peut être placée vers l'intérieur du cadre.

Le film (10) est ensuite fixé sur l'arrière du cadre (2) à l'aide, par exemple, de bandes adhésives double-face ou de colle, comme représenté à l'étape (42) de la figure 4. Pour cela les bords et les quatre coins du film (10) sont rabattus puis collés sur l'arrière du cadre (2). La face métallisée est placée, par exemple, vers l'extérieur du cadre (2).

La face métallisée du film (10) peut être traitée avec une couche de vernis afin de la rendre nettoyable. Ce dépôt permet de créer une surface nettoyable si, par exemple, des traces de doigts surviennent. Cette couche de vernis peut permettre également de protéger la métallisation de l'oxydation. Pour effectuer le dépôt de cette couche de vernis sur la surface métallisée, on utilise la technologie des plasmas froids. Cette technologie regroupe des dépôts de type PVD ( en anglais « Physical Vapour Deposition ») et CVD (en anglais « Chemical Vapour Deposition »). Ce traitement est réalisé à partir de générateurs multi-fréquences, ces fréquences allant de 10 à 300MHz. Les puissances des générateurs s'étalent de 0 à 5kW. Le plasma utilisé est généré par une composition variable de gaz neutres actifs et réactifs. L'activation de la surface et le dépôt sont réalisés dans le même réacteur et utilisent des précurseurs à base de silicium. Le dépôt est réalisé à des pressions allant de 10⁻⁶ à 10⁻¹ mbar. Les épaisseurs de couche obtenues sont comprises entre 5 nm et quelques dizaines de micromètres pour des temps de maintien de quelques minutes.

Le panneau miroir, pour sa fabrication et avant la thermorétraction, est par exemple posé à plat sur une table (30) de travail placée avant l'entrée d'un tunnel de rétraction.

L'ensemble est ensuite introduit, par l'intermédiaire d'un tapis roulant (31) placée dans le prolongement de la table (30), dans un tunnel (32) de manière à subir une rétraction, c'est à dire une tension du film (10) sur le cadre (2), comme représenté à l'étape (43) de la figure 4. L'avantage conféré par ce tunnel (32) est qu'il permet d'obtenir une tension du film (10) uniforme sur le cadre (2), en particulier à l'arrière du cadre (2) et au niveau du bord extérieur du cadre (2). Le chauffage est effectué entre 170°C et 210°C pendant environ 10 secondes. La rétraction est en moyenne de 1 cm/m de film (10). Le panneau miroir (1) est convoyé par le tapis roulant (31) depuis l'entrée du tunnel (32) jusqu'à sa sortie où il peut être récupéré.

Ce procédé permet de fabriquer sur une table (30) de travail des miroirs de très grandes dimensions, par exemple, de 8 à 9 m de long et de 2m de large. Le procédé selon l'invention présente également l'avantage de pouvoir être mis en oeuvre à la chaîne.

Un produit ignifuge peut être appliqué sur la face non métallisée du film (10) plastique. Cette application permet de pouvoir utiliser le panneau-miroir (1), fabriqué par le procédé selon l'invention, dans tous les lieux publics. Le produit ignifuge est déposé au rouleau ou au pistolet à raison de 40g/m².

Une mousse de polymère tel que, par exemple, du polyuréthane peut être ajoutée à l'arrière de la face métallisée du film (10). Cette mousse sert de protection au film (10) contre la déchirure si quelqu'un vient à appuyer sur le film (10).

Une anodisation de la métallisation permet également d'obtenir différents coloris de miroirs.

Selon une autre variante de réalisation, le film (10) n'est pas collé sur le cadre (2), mais est thermosoudé avec un second film, le cadre (2) étant pris entre les deux films. Les deux films constituent donc une enveloppe dans laquelle se trouve le cadre (2). L'ensemble suit ensuite une rétraction permettant la tension des deux films autour du cadre (2). Selon cette variante, il est possible d'ajouter une valve sur le cadre (2), afin d'envoyer de l'air sous pression entre les deux films, ce qui a pour but d'éviter les vibrations du film (10) lorsque le panneau-miroir (1) est utilisé en extérieur.

Un premier but de l'invention est atteint par un procédé de fabrication d'un panneau à miroir plan à partir d'un cadre-support métallique et d'un film, caractérisé en ce qu'il comprend les étapes suivantes :
- métallisation sous vide sur au moins une face du film avec de l'aluminium,
- tension du film sur le cadre avec la face métallisée vers l'extérieur ou vers l'intérieur du cadre,
- maintien du film sur le cadre dans cette position,
- passage de l'ensemble dans un tunnel de rétraction chauffant permettant une tension uniforme du film sur le cadre.

Selon une autre particularité, le tunnel chauffe entre 170 et 210°C

Selon une autre particularité, le film est maintenu fixé par ses bords sur l'arrière du cadre à l'aide de bandes adhésives double-face.

Selon une autre particularité, le cadre est un profilé en aluminium rectangulaire formant deux barres transversales et quatre autres barres disposées symétriquement, respectivement sur la partie supérieure et sur la partie inférieure du cadre, de manière à former chacune un triangle dans les quatre coins du cadre avec les bords du cadre.

Selon une autre particularité, l'épaisseur du cadre est faible de manière à protéger le film plastique lorsque le panneau est disposé contre un mur.

Selon une autre particularité, la métallisation est effectuée sur les deux faces du film.

Selon une autre particularité, le film est en polyester ou en polystyrène et fait de 12 à 50 µm d'épaisseur.

Selon une autre particularité, la métallisation est faite avec une couche de 2 à 3 µm d'aluminium.

Selon une autre particularité, un produit ignifuge est appliqué avec un rouleau ou un pistolet du côté de la face non métallisée du film.

Selon une autre particularité, une couche de vernis est déposée sur la face métallisée du film afin de créer une surface nettoyable.

Selon une autre particularité, la couche de vernis est déposée sur la face métallisée du film (10) à une épaisseur allant de 5 nm à quelques dizaines de micromètres.

Selon une autre particularité, une couche de mousse de polyuréthane est appliquée à l'arrière du cadre de manière à protéger le film.

Selon une autre particularité, une gamme étendue de coloris de miroirs peut être obtenue par anodisation de la métallisation.

Selon une autre particularité, le maintien du film réfléchissant sur le cadre est asservi par sa liaison à un deuxième film tendu sur la face opposée du cadre.

Selon une autre particularité, dans ce dernier cas, le film est maintenu par thermosoudage avec l'autre film.

Selon une autre particularité, une valve est ajoutée sur le cadre pour permettre l'envoi d'air sous pression à l'intérieur du volume, de manière à éviter les vibrations du miroir lorsqu'il est utilisé en extérieur.

## Revendications

1. Procédé de fabrication d'un panneau (1) à miroir plan à partir d'un cadre-support (2) métallique et d'un film (10), qui comprennent les étapes suivantes :
- métallisation sous vide sur au moins une face du film (10) avec de l'aluminium,
- tension du film (10) sur le cadre (2) avec la face métallisée vers l'extérieur ou vers l'intérieur du cadre(2),
- maintien du film (10) sur le cadre (2) dans cette position,
**caractérisé en ce que**,
- le passage de l'ensemble dans un tunnel de rétraction chauffant permet la tension uniforme du film (10) sur le cadre (2).

2. Procédé de fabrication d'un panneau (1) à miroir plan selon la revendication 1, **caractérisé en ce que** le tunnel chauffe entre 170 et 210°C

3. Procédé de fabrication d'un panneau (1) à miroir plan selon la revendication 1, **caractérisé en ce que** le film (10) est maintenu fixé par ses bords sur l'arrière du cadre (2) à l'aide de bandes adhésives double-face.

4. Procédé de fabrication d'un panneau (1) à miroir plan selon la revendication 1 ou 3, **caractérisé ne ce que** le cadre (2) est un profilé en aluminium rectangulaire formant deux barres transversales (21, 22) et quatre autres barres (23, 24, 25, 26) disposées symétriquement respectivement sur la face supérieure et sur la face inférieure du cadre (2) de manière à former, chacune, un triangle avec les bords du cadre (2) dans les quatre coins du cadre (2).

5. Procédé de fabrication d'un panneau (1) à miroir plan selon la revendication 4, **caractérisé en ce que** l'épaisseur du cadre (2) est faible, de manière à protéger le film (10) plastique lorsque le panneau (1) est disposé contre un mur.

6. Procédé de fabrication d'un panneau (1) à miroir plan selon l'une des revendications 1 à 5, **caractérisé en ce que** la métallisation est effectuée sur les deux faces du film (10).

7. Procédé de fabrication d'un panneau (1) à miroir plan selon l'une des revendications 1 à 6, **caractérisé en ce que** le film (10) est en polyester ou en polystyrène et fait de 12 à 50 µm d'épaisseur.

8. Procédé de fabrication d'un panneau (1) à miroir plan selon la revendication 1 ou 6, **caractérisé en ce que** la métallisation est faite avec une couche de 2 à 3 µm d'aluminium.

9. Procédé de fabrication d'un panneau (1) à miroir plan selon la revendication 1, **caractérisé en ce qu'**un produit ignifuge est appliqué avec un rouleau ou un pistolet du côté de la face non métallisée du film (10).

10. Procédé de fabrication d'un panneau (1) à miroir plan selon la revendication 1, **caractérisé en ce qu'**une couche de vernis est déposée sur la face métallisée du film (10) afin de créer une surface nettoyable.

11. Procédé de fabrication d'un panneau (1) à miroir plan selon la revendication 10, **caractérisé en ce que** la couche de vernis est déposée sur la face métallisée du film (10) à une épaisseur allant de 5 nm à quelques dizaines de micromètres.

12. Procédé de fabrication d'un panneau (1) à miroir plan selon la revendication 1, **caractérisé en ce qu'**une couche de mousse de polyuréthane est appliquée à l'arrière du cadre (2) de manière à protéger le film (10).

13. Procédé de fabrication d'un panneau (1) à miroir plan selon la revendication 1, **caractérisé en ce qu'**une gamme étendue de coloris de miroirs peut être obtenue par anodisation de la métallisation.

14. Procédé de fabrication d'un panneau (1) à miroir plan selon la revendication 1, **caractérisé en ce que** le maintien du film (10) réfléchissant sur le cadre (2) est asservi par sa liaison à un deuxième film tendu sur la face opposée du cadre.

15. Procédé de fabrication d'un panneau (1) à miroir plan selon la revendication 14, **caractérisé en ce que** le film (10) est maintenu par thermosoudage avec l'autre film.

16. Procédé de fabrication d'un panneau (1) à miroir plan selon la revendication 14 ou 15, **caractérisé en ce qu'**une valve est ajoutée sur le cadre (2) pour permettre l'envoi d'air sous pression à l'intérieur, de manière à éviter les vibrations du miroir lorsqu'il est utilisé en extérieur.

## Claims

1. Method for manufacturing a plane mirror panel (1) from a metal support frame (2) and a film (10), which comprise the following steps:
- vacuum metallisation with aluminium on at least one face of the film (10),
- stretching the film (10) over the frame (2) with the metallised face towards the outside or towards the inside of the frame (2),
- holding the film (10) on the frame (2) in this position,
**characterised in that** the passage of the whole into a heating shrinking tunnel allows uniform tension of the film (10) over the frame (2).

2. Method for manufacturing a plane mirror panel (1) according to Claim 1, **characterised in that** the tunnel heats to between 170 and 210°C.

3. Method for manufacturing a plane mirror panel (1) according to Claim 1, **characterised in that** the film (10) is held fixed by its edges to the back of the frame (2) using double-faced adhesive strips.

4. Method for manufacturing a plane mirror panel (1) according to Claim 1 or 3, **characterised in that** the frame (2) is a rectangular aluminium section forming two transverse bars (21, 22) and four other bars (23, 24, 25, 26) arranged symmetrically on the upper face and the lower face of the frame (2) respectively, so as each to form a triangle with the edges of the frame (2) in the four comers of the frame (2).

5. Method for manufacturing a plane mirror panel (1) according to Claim 4, **characterised in that** the thickness of the frame (2) is low, so as to protect plastic film (10) when the panel (1) is placed against a wall.

6. Method for manufacturing a plane mirror panel (1) according to one of Claims 1 to 5, **characterised in that** the metallisation is carried out on both faces of the film (10).

7. Method for manufacturing a plane mirror panel (1) according to one of Claims 1 to 6, **characterised in that** the film (10) is made of polyester or polystyrene and is from 12 to 50 µm thick.

8. Method for manufacturing a plane mirror panel (1) according to Claim 1 or 6, **characterised in that** the metallisation is carried out with a 2 to 3 µm layer of aluminium.

9. Method for manufacturing a plane mirror panel (1) according to Claim 1, **characterised in that** a fireproof product is applied with a roller or a gun on the side of the non-metallised face of the film (10).

10. Method for manufacturing a plane mirror panel (1) according to Claim 1, **characterised in that** a layer of varnish is deposited on the metallised face of the film (10) so as to create a cleanable surface.

11. Method for manufacturing a plane mirror panel (1) according to Claim 10, **characterised in that** the layer of varnish is deposited on the metallised face of the film (10) at a thickness from 5 nm to a few tens of micrometers.

12. Method for manufacturing a plane mirror panel (1) according to Claim 1, **characterised in that** a layer of polyurethane foam is applied to the back of the frame (2) so as to protect the film (10).

13. Method for manufacturing a plane mirror panel (1) according to Claim 1, **characterised in that** a wide range of mirror colours can be obtained by anodising the metallisation.

14. Method for manufacturing a plane mirror panel (1) according to Claim 1, **characterised in that** the holding of the reflective film (10) on the frame (2) is controlled by its connection to a second film stretched over the opposite face of the frame.

15. Method for manufacturing a plane mirror panel (1) according to Claim 14, **characterised in that** the film (10) is held by heat sealing to the other film.

16. Method for manufacturing a plane mirror panel (1) according to Claim 14 or 15, **characterised in that** a valve is added to the frame (2) in order to allow air to be sent inside under pressure, so as to prevent the mirror from vibrating when it is used outside.

## Patentansprüche

1. Verfahren zur Herstellung eines Planspiegel-Paneels (1), ausgehend von einem metallischen Trägerrahmen (2) und einer Folie (10), das folgende Schritte umfasst:
- Vakuum-Metallisierung mindestens einer Fläche der Folie (10) mit Aluminium,
- Spannen der Folie (10) auf den Rahmen (2), wobei die metallisierte Fläche nach außen oder innen, bezogen auf den Rahmen (2), zeigt,
- Festhalten der Folie (10) auf dem Rahmen (2) in dieser Position,
**dadurch gekennzeichnet, dass**
- das Ganze durch einen Heißschrumpftunnel geführt wird, der das gleichmäßige Spannen der Folie (10) auf den Rahmen (2) ermöglicht.

2. Verfahren zur Herstellung eines Planspiegel-Paneels (1) nach Anspruch 1, **dadurch gekennzeichnet, dass** der Tunnel auf zwischen 170 und 210°C erhitzt.

3. Verfahren zur Herstellung eines Planspiegel-Paneels (1) nach Anspruch 1, **dadurch gekennzeichnet, dass** die Folie (10) mit Hilfe von doppelseitigen Klebebändern an ihren Rändern an der hinteren Seite des Rahmens (2) festgehalten wird.

4. Verfahren zur Herstellung eines Planspiegel-Paneels (1) nach Anspruch 1 oder 3, **dadurch gekennzeichnet, dass** der Rahmen (2) ein rechteckiges Aluminiumprofil ist, das zwei Querstangen (21, 22) und vier weitere Stangen (23, 24, 25, 26) bildet, die jeweils symmetrisch auf der oberen Fläche und auf der unteren Fläche des Rahmens (2) angeordnet sind, so dass jede mit den Rändern des Rahmens (2) in allen vier Ecken des Rahmens (2) ein Dreieck bildet.

5. Verfahren zur Herstellung eines Planspiegel-Paneels (1) nach Anspruch 4, **dadurch gekennzeichnet, dass** die Dicke des Rahmens (2) gering ist, so dass die Plastikfolie (10) geschützt wird, wenn das Paneel (1) gegen eine Wand angebracht wird.

6. Verfahren zur Herstellung eines Planspiegel-Paneels (1) nach einem der Ansprüche 1 bis 5, **dadurch gekennzeichnet, dass** die Metallisierung auf beide Flächen der Folie (10) durchgeführt wird.

7. Verfahren zur Herstellung eines Planspiegel-Paneels (1) nach einem der Ansprüche 1 bis 6, **dadurch gekennzeichnet, dass** die Folie (10) aus Polyester oder Polystyrol hergestellt ist und 12 µm bis 50 µm dick ist.

8. Verfahren zur Herstellung eines Planspiegel-Paneels (1) nach Anspruch 1 oder 6, **dadurch gekennzeichnet, dass** die Metallisierung mit einer Aluminiumschicht von einer Dicke von 2 µm bis 3 µm durchgeführt wird.

9. Verfahren zur Herstellung eines Planspiegel-Paneels (1) nach Anspruch 1, **dadurch gekennzeichnet, dass** ein Flammenschutzmittel mit einer Rolle oder einer Pistole auf die Seite der nicht-metallisierten Fläche der Folie (10) aufgebracht wird.

10. Verfahren zur Herstellung eines Planspiegel-Paneels (1) nach Anspruch 1, **dadurch gekennzeichnet, dass** eine Lackschicht auf die metallisierte Fläche der Folie (10) aufgebracht wird, so dass eine Oberfläche gebildet wird, die gesäubert werden kann.

11. Verfahren zur Herstellung eines Planspiegel-Paneels (1) nach Anspruch 10, **dadurch gekennzeichnet, dass** die Lackschicht in einer Dicke von 5 nm bis zu mehreren Dutzend Mikrometer auf die metallisierte Fläche der Folie (10) aufgebracht wird.

12. Verfahren zur Herstellung eines Planspiegel-Paneels (1) nach Anspruch 1, **dadurch gekennzeichnet, dass** eine Schicht Polyurethanschaumstoff auf die hintere Seite des Rahmens (2) aufgebracht wird, so dass die Folie (10) geschützt wird.

13. Verfahren zur Herstellung eines Planspiegel-Paneels (1) nach Anspruch 1, **dadurch gekennzeichnet, dass** eine breite Palette von Spiegelfärbungen durch Eloxieren der Metallisierung erhalten werden kann.

14. Verfahren zur Herstellung eines Planspiegel-Paneels (1) nach Anspruch 1, **dadurch gekennzeichnet, dass** das Halten der reflektierenden Folie (10) auf dem Rahmen (2) durch ihre Verbindung zu einer zweiten, auf der gegenüberliegenden Seite des Rahmens gespannten Folie gesteuert wird.

15. Verfahren zur Herstellung eines Planspiegel-Paneels (1) nach Anspruch 14, **dadurch gekennzeichnet, dass** die Folie (10) durch Warmschweißen mit der anderen Folie gehalten wird.

16. Verfahren zur Herstellung eines Planspiegel-Paneels (1) nach Anspruch 14 oder 15, **dadurch gekennzeichnet, dass** auf dem Rahmen (2) ein Ventil hinzugefügt wird, um eine Luftzufuhr unter Druck nach innen zu ermöglichen, so dass die Vibrationen des Spiegels vermieden werden, wenn er in einem Außenbereich verwendet wird.
